(19) **Europäisches Patentamt / European Patent Office / Office européen des brevets**

(11) **EP 3 349 993 B1**

(12) **FASCICULE DE BREVET EUROPEEN**

(45) Date de publication et mention de la délivrance du brevet:
**30.06.2021 Bulletin 2021/26**

(21) Numéro de dépôt: **16767002.5**

(22) Date de dépôt: **31.08.2016**

(51) Int Cl.:
**B60B 19/04** *(2006.01)* **B60B 25/02** *(2006.01)*

(86) Numéro de dépôt international:
**PCT/FR2016/052155**

(87) Numéro de publication internationale:
**WO 2017/046468 (23.03.2017 Gazette 2017/12)**

(54) **ROUE A DIAMETRE VARIABLE**

REIFEN MIT VERSTELLBAREM DURCHMESSER

VARIABLE DIAMETER WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2015 FR 1558839**

(43) Date de publication de la demande:
**25.07.2018 Bulletin 2018/30**

(73) Titulaire: **Beautiful and Usable**
**41400 Vallières les Grandes (FR)**

(72) Inventeur: **FOURDRINIER, Vincent**
**41400 Vallières les Grandes (FR)**

(74) Mandataire: **IP Trust**
**2, rue de Clichy**
**75009 Paris (FR)**

(56) Documents cités:
**EP-A1- 0 665 128    GB-A- 251 256**
**GB-A- 498 623**

## Description

### Domaine de l'invention

La présente invention concerne le domaine des roues à diamètre variable permettant de réaliser une bande de roulement ou d'entraînement de longueur variable. De telles roues trouvent des applications multiples :

- Equipements de transport, où la variation du diamètre de roue permet de s'adapter à des terrains variables
- Equipements individuels tels que fauteuils roulants, bicyclettes urbaines, où la réduction du diamètre permet de réduire l'encombrement en dehors des périodes d'utilisation
- Disque d'entraînement de courroies, où la variation de diamètre d'une paire de roues permet de modifier les caractéristiques d'une transmission
- Valise à roulette, où la variation de diamètre des roulettes permet une adaptation à la nature du sol sur lequel est déplacée la valise
- Poussettes d'enfant, permettant également d'adapter le diamètre des roues à la nature du terrain.

Il s'agit bien sur de simples exemples d'applications de telles roues à diamètre variable.

### Etat de la technique

On connaît dans l'état de la technique GB498623 un dispositif destiné à équiper une roue de section fixe présentant des crampons escamotables. Ce dispositif est coaxial avec une roue à dimension fixe et permet d'améliorer l'adhérence sur des sols mous. Ces crampons sont formés par des bras escamotables présentant chacun une extrémité distale formant des pics qui viennent s'enfoncer dans un sol meuble.

On connaît aussi le brevet GB251256 décrivant une roue présentant des sections de bandage de rayon constant qui sont ajustables par des pièces de liaison tangentielles, pour faciliter le remplacement de la bande de roulement.

On connaît aussi le brevet européen EP0665128 décrivant une roue à diamètre extérieur variable. Cette roue de diamètre comprend un tube ayant quatre trous pénétrants sur sa paroi cylindrique, un joint d'étanchéité ayant des diaphragmes correspondant aux trous de pénétration est monté sur le tube. Des curseurs sont poussés et déplacés dans des orifices radiaux de telle sorte que le diamètre extérieur de la roue est agrandie par l'injection d'air comprimé à partir d'un trou disposé sur un axe de un essieu à travers les membranes. Lorsque l'air comprimé est épuisé, le diamètre extérieur de la roue diminue et restaure à la taille originale.

### Inconvénients de l'art antérieur

Les solutions de l'art antérieur mettent en œuvre des mécanismes relativement complexes à l'intérieur de la roue, ce qui les rend fragiles et peu adaptées à des réalisations de petites dimensions comme des roulettes de valise.

Par ailleurs, le nombre de pièces mobiles pour assurer la variation du diamètre réduit les efforts et le couple qui peut être transmis par le moyeu à la jante de la roue et provoque une usure rapide produisant du jeu préjudiciable à la durée de vie et au fonctionnement de la roue.

Enfin, la solution proposée par le brevet GB498623 associe nécessairement une bande de roulement à diamètre constant et des crampons escamotables venant améliorer l'adhésion lorsque le sol est meuble. Le diamètre de la roue lui-même n'est pas variable.

### Solution apportée par l'invention

Pour remédier à ces inconvénients, la présente invention propose une solution simple et robuste permettant d'assurer facilement un doublement de la section minimale de la roue et un quadruplement de la longueur déroulée de la jante.

L'invention concerne selon son acception la plus générale une roue à diamètre variable constituée par un moyeu central, une bande périphérique formée par une pluralité de segments arqués, chacun des segments arqués étant relié audit moyeu caractérisé en ce que ledit moyeu comprend des moyens de guidage radiaux pour le coulissement de bras radiaux escamotables, chacun des bras radiaux escamotables étant solidaire à son extrémité distale d'un desdits segments arqués, l'extrémité opposée étant muni d'un organe de liaison avec un plateau mobile coaxial avec ledit moyeu et en rotation par rapport audit moyeu, ledit plateau mobile présentant des zones de guidage incurvées, chacun desdits organes de liaison coopérant avec l'un desdits bras afin de commander le déplacement linéaire et radial de l'extrémité proximale du bras correspondant.

Avantageusement, ledit moyeu présente des glissières de section complémentaire à la section des bras escamotables radiaux pour permettre un coulissement du bras par rapport à la glissière correspondante

Selon une variante, l'extrémité distale desdites zones de guidage incurvées est sensiblement tangentielle.

Selon une autre variante, ledit plateau mobile est formé de deux disques complémentaires disposés de part et d'autre desdits bras escamotables.

De préférence, lesdites zones de guidage sont formées par des nervures spirales coopérant avec organe de liaison formé par un téton s'étendant axialement par rapport à l'extrémité proximal de chacun desdits bras escamotables.

Selon un mode de réalisation arqué, chacun desdits segments arqué présente au moins une gorge périphérique pour recevoir un prolongement arqué d'au moins un segment arqué adjacent.

De préférence, chacun desdits segments arqué présente une pluralité de gorges périphériques pour recevoir des prolongements arqués des deux segments arqués adjacents.

L'invention concerne également l'application d'une telle roue pour la réalisation :

- d'un système d'entrainement comprenant une courroie de transmission et deux pignons, caractérisé en ce que l'un au moins desdits pignons est constitué par une roue à diamètre variable susvisée
- d'un fauteuil roulant comprenant des roues à diamètre variable susvisées
- d'une valise roulante comprenant des roues à diamètre variable
- d'un véhicule comprenant des roues à diamètre variable.

## Description détaillée d'un exemple non limitatif de réalisation de l'invention

La présente invention sera mieux comprise à la lecture de la description qui suit, se référant à un exemple non limitatif de réalisation et aux dessins annexés où :

- la figure 1 représente une vue de face de la roue dans sa plus grande extension
- le figure 2 représente une vue éclatée de la roue
- la figure 3 représente une vue de face de la roue en configuration rétractée
- les figures 4 et 5 représentent des vues d'une variante de réalisation d'une roue respectivement en position de diamètre maximal et de diamètre minimal.

### Contexte d'application de l'invention

La roue selon l'invention présente la particularité de doubler de manière réversible la circonférence d'une roue afin d'améliorer les usages actuels, par exemple pour limiter l'encombrement d'un objet du quotidien, valises, poussettes, toute en conservant une surface de roulement continue, quelque soit la section de la roue.

Avec une valise et ses minuscules roues, à l'approche d'un escalier, il n'y a pas d'autres solutions que de la porter. L'invention permet de modifier le diamètre de la roue pour l'adapter au mieux à la nature de la surface de circulation.

De la même façon, avec des roues de section fixe, l'usager doit choisir entre compacité/rangement et maniabilité/franchissement d'une poussette, alors qu'une roue selon l'invention permet d'adapter le rayon pour satisfaire à tout moment le contexte d'utilisation.

D'autres applications sont possibles dans de nombreux autres domaines, un fauteuil roulant (pour l'encombrement et le rangement), des porteurs, diables, vélos pliant, etc.

Une telle roue est également applicable à un véhicule présentant des besoins en franchissement (militaire, ou engin robotisé en terrain accidenté), permettant par exemple de passer d'une roue 21 pouces à une roue de 42 pouces, ce qui augmente considérablement ses capacités et aptitudes.

Une telle roue selon l'invention permet d'incorporer un asservissement électrique et/ou d'intégrer une motorisation (afin de la transformer en roue/moteur).

Enfin, un telle roue à diamètre variable permet de réaliser des transmission variable par courroie ou par chaîne, par exemple en utilisant une paire de roues dont on modifie de manière opposée la variation du diamètre : on obtient ainsi un rapport de transmission variable, avec une longueur de courroie constante. Si le diamètre d'une roue peut varier de 100% par un doublement du diamètre, le rapport de transmission peut varier de manière continue entre 4 (correspondant à une roue entraînant en extension maximale et une roue entraînée en extension minimale) et 0,25 (correspondant à une roue entraînant en extension minimale et une roue entraînée en extension maximale). Pour une application automobile, il est ainsi possible d'utiliser un moteur à régime constant, correspondant à un point de fonctionnement optimal, et d'ajuster la vitesse en agissant sur les diamètres des deux roues à section variable réunies par une courroie.

### Description d'un premier exemple de réalisation

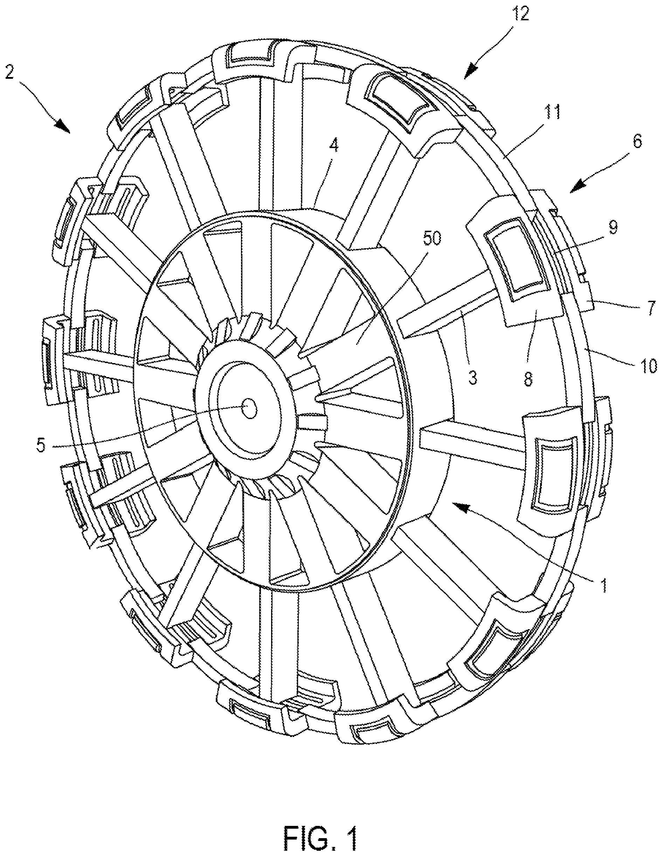

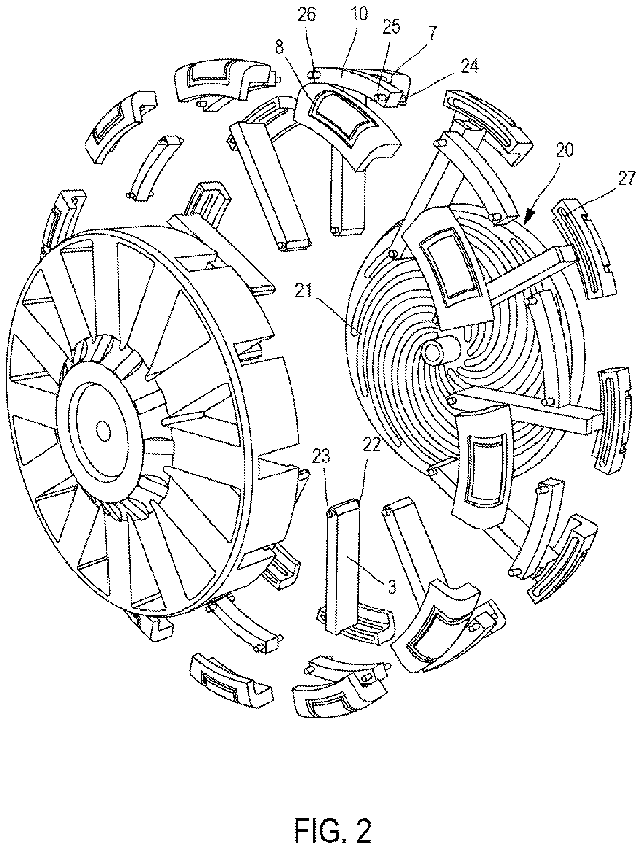

Les figures 1 et 2 représentent des vues de la roue dans sa configuration déployée dans laquelle elle présente le diamètre extérieur maximal.

Elle comporte un moyeu (1) et une jante (2) reliés par des bras escamotables (3). Ces bras (3) s'étendent radialement et présentent dans l'exemple décrit une section rectangulaire.

Le moyeu (1) est constitué d'un corps (4) présentant un axe central (5) et des glissières s'étendant radialement.

Ces glissières (50) présente une section transversale complémentaire de celle des bras escamotables (3) pour permettre le coulissement de ces bras (3) à l'intérieur de la glissière (50) correspondante, avec un guidage à translation à palier lisse ou éventuellement à éléments roulants.

Chaque bras (3) est prolongé à son extrémité distale d'un segment arqué (6) s'étendant sur un angle de 360/N degrés, où N désigne le nombre de bras (3).

Chaque segment arqué (6) présente une section de bande de roulement formée de deux parties rigides (7, 8) symétrique par rapport au plan médian dans l'exemple décrit, séparées par une fente (9) et d'un segment de liaison (10) de forme complémentaire à la fente (9).

Le segment de liaison (11) du segment arqué (12) adjacent coulisse à l'intérieur de la fente (9) pour permettre une variation de la circonférence de la roue en fonction du changement de diamètre, et assurer une surface de roulement ininterrompue.

Comme vue sur la figure 2, le segment de liaison (10, 11) est formé par un bloc dont la largeur correspond à la fente (9), prolongé à chaque extrémité par une paire de tétons (24 à 26) venant assurer le guidage par rapport à des rainures de guidage arquées (27) prévues sur la face intérieure des deux parties rigides (7, 8) de chaque segment arqué (6).

Fonctionnement de la roue selon l'invention

Le fonctionnement est le suivant :
La roue comprend en outre un plateau de commande, formé de deux disques (20) coaxiaux avec le moyeu (1), disposés symétriquement de part et d'autre des bras (3).
Chaque disque (20) présente N rainures (21), N correspondant au nombre de bras (3).
Ces rainures présentent une forme spirale, avec une extrémité la plus proche du rayon sensiblement tangentielle, formant un angle compris entre 5 et 15 degrés par rapport à la tangente, et se prolongeant jusqu'à une zone périphérique où l'extrémité de la rainure forme également un angle compris entre 5 et 15 degrés par rapport à la tangente.
La rainure (21) s'étend sur un secteur angulaire du disque (20) de 180° dans l'exemple décrit, mais il peut s'étendre sur un secteur plus petit, compris entre 90 et 180° pour permettre une variation rapide du diamètre, ou au contraire plus important, compris entre 180 et 360° pour permettre une variation plus graduelle du diamètre.
Le profil de courbure des rainures (21) est constant. Il peut aussi être variable, avec une variation croissante puis décroissante de l'angle entre la tangente à un point de la spirale et l'axe radial passant pas ce même point.
Chaque rainure est définie par une fonction de type :

$$R = fn (alpha)$$

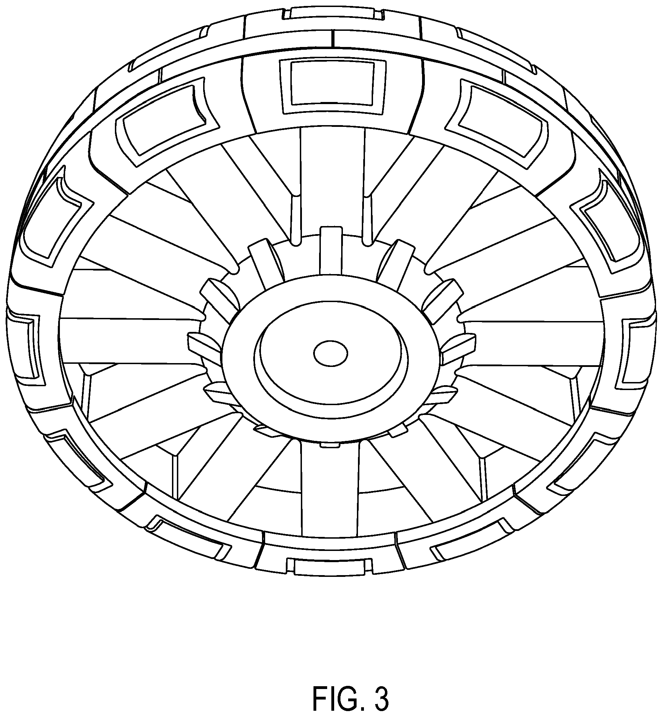

Où R désigne la distance d'un point de la rainure par rapport à l'axe du disque
Alpha désigne la position angulaire de ce point par rapport à un rayon de référence passant pas l'extrémité proximale de la rainure.
Chaque rainure est décalée par rapport à la précédente d'un angle de 360/N où N désigne le nombre de bras.
La fonction fn peut être une fonction constante, de type 360/K où K désigne la plage de déplacement angulaire du disque entre la position rétractée et la position déployée des bras. K peut être supérieur ou inférieur à 1.
La fonction fn peut aussi être une fonction progressive, par exemple de type sinus, pour commander au début et à la fin de l'extension des bras une évolution lente, et plus rapide entre ces deux situations. Elle peut également présenter un ou plusieurs paliers pour permettre une extension indexée.
Chaque bras (3) présente à son extrémité proximale deux ergots (22, 23) symétriques par rapport au plan médian, destinés à coopérer avec une rainure (20) afin de commander le déplacement linéaire de l'extrémité du bras (3) dans la glissière (50) de guidage correspondante.
Le fonctionnement est le suivant. En position rétractée représentée en figure 3, les bras (3) sont escamotés, le disque (20) étant positionné angulairement par rapport au moyeu (1) dans une position dans laquelle les extrémités proximales des rainures (21) sont alignées avec l'axe radial passant par le bras (3) correspondant.
Lorsqu'on fait tourner ce disque (20) par rapport au moyeu (1), le point de contact entre les ergots (22, 23) prévus à l'extrémité proximale du bras (3) et la rainure correspondante (21) se déplace vers la périphérie du disque (20), ce qui provoque l'érection des bras (3) en position déployée.
Le guidage des bras (3) par les glissières (50) assure une grande robustesse de la roue quelque soit le niveau d'extension.

Description d'un deuxième exemple de réalisation

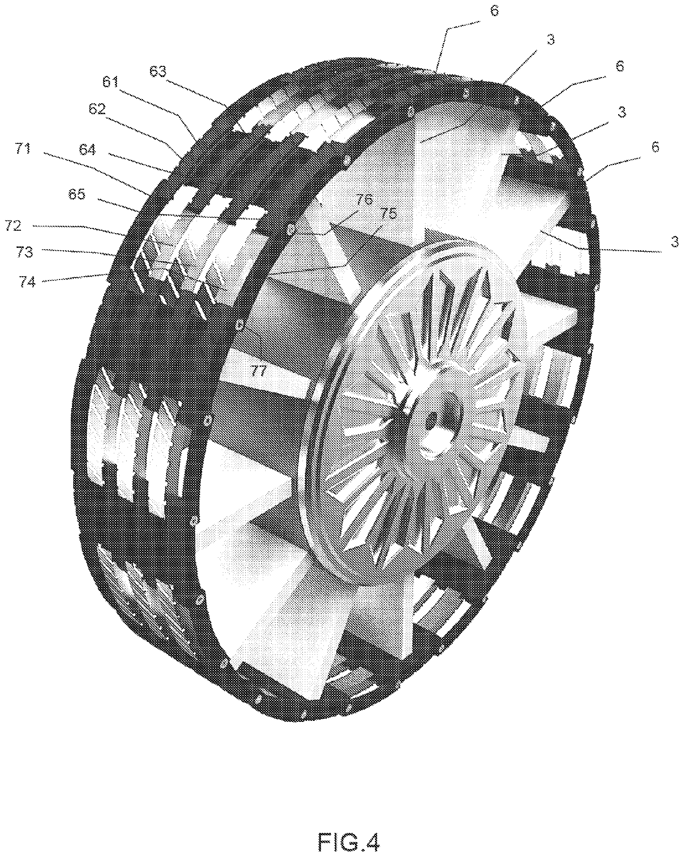

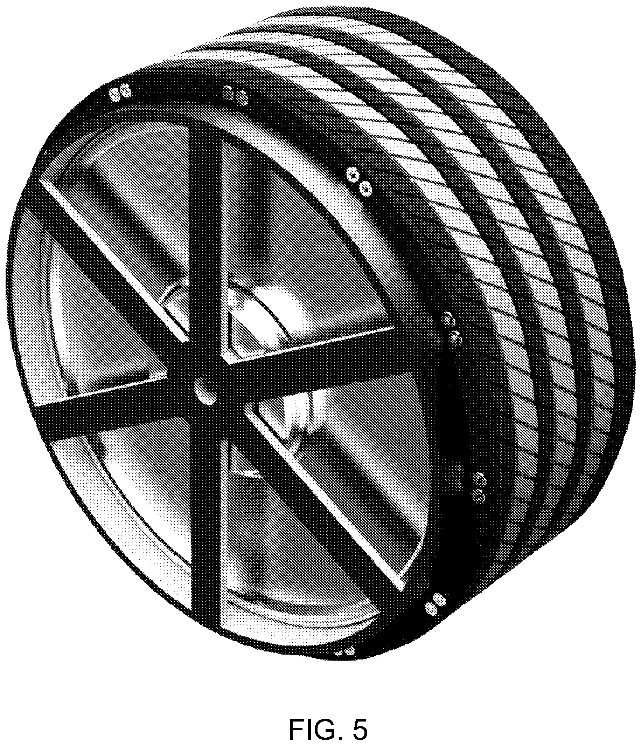

La roue selon cette variante de réalisation de l'invention comporte une bande de roulement constitué de segments arqués (6) prolongeant les bras escamotables (3) et s'étendant perpendiculairement au plan médian du bras escamotable correspondant.
Ces segments arqués (6) sont constitués par une platine (61) en forme de tuile, sur laquelle sont fixés des bandes arquées (62 à 65), débordant de part et d'autre de la platine (61). Ces bandes arquées (62 à 65) délimitent entre elles des rainures arquées permettant le glissement de lames arquées (72 à 74). Ces lames arquées (72 à 74) sont réunies par une pièce de liaison formée de deux flasques latérales (71, 75) reliées par des tiges transversales (76, 77) traversant des canaux prévues aux extrémités des lames arquées (72 à 74) et des fentes traversant les bandes arquées (62 à 65) .
L'ensemble formé par les lames arquées (72 à 74), les deux flasques latérales (71, 75) et les deux tiges transversales (76, 77) forme un segment pouvant coulisser entre les rainures arquées formées entre les bandes arquées (62 à 65) des deux segments arqués adjacents.
Les lames arquées (72 à 74) présentent une épaisseur déterminée pour remplir l'espace entre deux bandes arquées (62 à 65) et former une surface de roulement constante sur la largeur de la roue, dans les zones de recouvrement. Lorsque la roue est totalement rétractée comme représenté en figure 5, elle présente une surface de roulement annulaire. En position étendue représentée en figure 4, la surface de roulement annulaire est ajourée.

Eventuellement, une membrane élastique peut recouvrir la périphérie de la roue pour assurer la fermeture de ses parties ajourées.

## Revendications

1. Roue à diamètre variable constituée par un moyeu central (1), une bande périphérique formée par une pluralité de segments arqués (6), chacun des segments arqués (6) étant relié audit moyeu (1) **caractérisée en ce que** ledit moyeu (1) comprend des moyens de guidage radiaux (5) pour le coulissement de bras radiaux escamotables (3), chacun des bras radiaux escamotables (3) étant solidaire à son extrémité distale d'un desdits segments arqués (6), l'extrémité opposée étant muni d'un organe de liaison (22, 23) avec un plateau mobile (20) coaxial avec ledit moyeu (1) et en rotation relative par rapport audit moyeu (1), ledit plateau mobile (20) présentant des zones de guidage incurvées (21), chacun desdits organes de liaison (22, 23) coopérant avec l'un desdits bras (3) afin de commander le déplacement linéaire et radial de l'extrémité proximale du bras (3) correspondant.

2. Roue de diamètre variable selon la revendication 1 **caractérisée en ce que** ledit moyeu (1) présente des glissières (50) de section complémentaire à la section des bras escamotables radiaux pour permettre un coulissement du bras (3) par rapport à la glissière (50) correspondante.

3. Roue de diamètre variable selon la revendication 1 **caractérisée en ce que** l'extrémité distale desdites zones de guidage incurvées (21) est sensiblement tangentielle.

4. Roue de diamètre variable selon la revendication 1 **caractérisée en ce que** ledit plateau mobile est formé de deux disques complémentaires (20) disposés de part et d'autre desdits bras escamotables (3).

5. Roue de diamètre variable selon la revendication 1 **caractérisée en ce que** lesdites zones de guidage sont formées par des nervures spirales (21) coopérant avec un organe de liaison formé par un téton (22, 23) s'étendant axialement par rapport à l'extrémité proximal de chacun desdits bras escamotables (3).

6. Roue de diamètre variable selon la revendication 1 **caractérisée en ce que** chacun desdits segments arqué (6) présente au moins une gorge périphérique (27) pour recevoir un prolongement (10, 11) arqué d'au moins un segment arqué adjacent.

7. Roue de diamètre variable selon la revendication 6 **caractérisée en ce que** chacun desdits segments arqué (6) présente une pluralité de gorges périphériques (27) pour recevoir des prolongements arqués des deux segments arqués adjacents.

8. Système d'entrainement comprenant une courroie de transmission et deux pignons, **caractérisé en ce que** l'un au moins desdits pignons est constitué par une roue à diamètre variable selon la revendication 1.

9. Fauteuil roulant comprenant des roues à diamètre variable **caractérisé en ce que** lesdites roues sont des roues à diamètre variable selon la revendication 1.

10. Valise roulante comprenant des roues à diamètre variable **caractérisée en ce que** lesdites roues sont des roues à diamètre variable selon la revendication 1.

11. Véhicule comprenant des roues à diamètre variable **caractérisé en ce que** lesdites roues sont des roues à diamètre variable selon la revendication 1.

## Patentansprüche

1. Rad mit variablem Durchmesser, bestehend aus einer zentralen Nabe (1), einem Umfangsband, das aus einer Vielzahl von bogenförmigen Segmenten (6) gebildet ist, wobei jedes der bogenförmigen Segmente (6) mit der Nabe (1) verbunden ist, **dadurch gekennzeichnet, dass** die Nabe (1) radiale Führungsmittel (5) zur Gleitung von einziehbaren radialen Armen (3) umfasst, wobei jeder der einziehbaren radialen Arme (3) an seinem distalen Ende mit einem der bogenförmigen Segmente (6) fest verbunden ist, wobei das gegenüberliegende Ende mit einem Verbindungselement (22, 23) mit einer beweglichen Platte (20) versehen ist, die koaxial mit der Nabe (1) und in relativer Drehung in Bezug auf die Nabe (1) ist, wobei die bewegliche Platte (20) gekrümmte Führungszonen (21) aufweist, wobei jedes der Verbindungselemente (22, 23) mit einem der Arme (3) zusammenwirkt, um die lineare und radiale Verschiebung des proximalen Endes des entsprechenden Arms (3) zu steuern.

2. Rad mit variablem Durchmesser nach Anspruch 1, **dadurch gekennzeichnet, dass** die Nabe (1) Gleitstücke (50) mit einem zum Querschnitt der radial einziehbaren Arme komplementären Querschnitt aufweist, um das Gleiten des Arms (3) in Bezug auf das entsprechende Gleitstück (50) zu ermöglichen.

3. Rad mit variablem Durchmesser nach Anspruch 1, **dadurch gekennzeichnet, dass** das distale Ende der gekrümmten Führungszonen (21) im Wesentlichen tangential ist.

4. Rad mit variablem Durchmesser nach Anspruch 1, **dadurch gekennzeichnet, dass** die bewegliche Platte durch zwei komplementäre Scheiben (20) gebildet wird, die auf beiden Seiten der einziehbaren Arme (3) angeordnet sind.

5. Rad mit variablem Durchmesser nach Anspruch 1, **dadurch gekennzeichnet, dass** die Führungszonen durch spiralförmige Rippen (21) gebildet werden, die mit einem Verbindungselement zusammenwirken, das durch einen Zapfen (22, 23) gebildet wird, der sich axial in Bezug auf das proximale Ende jedes der genannten einziehbaren Arme (3) erstreckt.

6. Rad mit variablem Durchmesser nach Anspruch 1, **dadurch gekennzeichnet, dass** jedes der bogenförmigen Segmente (6) mindestens eine Umfangsnut (27) zur Aufnahme einer bogenförmigen Verlängerung (10, 11) mindestens eines benachbarten bogenförmigen Segments aufweist.

7. Rad mit variablem Durchmesser nach Anspruch 6, **dadurch gekennzeichnet, dass** jedes der bogenförmigen Segmente (6) eine Vielzahl von Umfangsnuten (27) zur Aufnahme von bogenförmigen Verlängerungen der beiden benachbarten bogenförmigen Segmente aufweist.

8. Antriebssystem, umfassend einen Antriebsriemen und zwei Zahnräder, **dadurch gekennzeichnet, dass** mindestens eines der Zahnräder ein Rad mit variablem Durchmesser nach Anspruch 1 ist.

9. Rollstuhl, umfassend Räder mit variablem Durchmesser, **dadurch gekennzeichnet, dass** die Räder Räder mit variablem Durchmesser nach Anspruch 1 sind.

10. Rollkoffer, umfassend Räder mit variablem Durchmesser, **dadurch gekennzeichnet, dass** die Räder Räder mit variablem Durchmesser nach Anspruch 1 sind.

11. Fahrzeug, umfassend Räder mit variablem Durchmesser, **dadurch gekennzeichnet, dass** die Räder Räder mit variablem Durchmesser nach Anspruch 1 sind.

## Claims

1. Variable-diameter wheel consisting of a central hub (1), a peripheral band formed by a plurality of arcuate segments (6), each of the arcuate segments (6) being connected to said hub (1), **characterized in that** said hub (1) comprises radial guide means (5) for the sliding of retractable radial arms (3), each of the retractable radial arms (3) being rigidly connected at its distal end to one of said arcuate segments (6), the opposite end being provided with a member (22, 23) for connection to a movable plate (20) that is coaxial with said hub (1) and rotatable relative to said hub (1), said movable plate (20) having curved guide regions (21), each of said connecting members (22, 23) engaging with one of said arms (3) in order to control the linear and radial movement of the proximal end of the corresponding arm (3).

2. Variable-diameter wheel according to claim 1, **characterized in that** said hub (1) has slides (50) having a cross section that matches the cross section of the radial retractable arms to allow the arm (3) to slide relative to the corresponding slide (50).

3. Variable-diameter wheel according to claim 1, **characterized in that** the distal end of said curved guide regions (21) is substantially tangential.

4. Variable-diameter wheel according to claim 1, **characterized in that** said movable plate is formed of two matching discs (20) arranged on either side of said retractable arms (3).

5. Variable-diameter wheel according to claim 1, **characterized in that** said guide regions are formed by spiral ribs (21) which engage with a connecting member formed by a stud (22, 23) that extends axially relative to the proximal end of each of said retractable arms (3).

6. Variable-diameter wheel according to claim 1, **characterized in that** each of said arcuate segments (6) has at least one peripheral groove (27) for receiving an arcuate extension (10, 11) of at least one adjacent arcuate segment.

7. Variable-diameter wheel according to claim 6, **characterized in that** each of said arcuate segments (6) has a plurality of peripheral grooves (27) for receiving arcuate extensions of the two adjacent arcuate segments.

8. Drive system comprising a transmission belt and two pinions, **characterized in that** at least one of said pinions consists of a variable-diameter wheel according to claim 1.

9. Wheelchair comprising variable-diameter wheels, **characterized in that** said wheels are variable-diameter wheels according to claim 1.

**10.** Rolling suitcase comprising variable-diameter wheels, **characterized in that** said wheels are variable-diameter wheels according to claim 1.

**11.** Vehicle comprising variable-diameter wheels, **characterized in that** said wheels are variable-diameter wheels according to claim 1.

FIG. 1

FIG. 2

FIG. 3

FIG.4

FIG. 5

## RÉFÉRENCES CITÉES DANS LA DESCRIPTION

**Documents brevets cités dans la description**

- GB 498623 A
- GB 251256 A
- EP 0665128 A